# EUROPEAN PATENT SPECIFICATION

(11) **EP 4 411 637 B1**
(45) Date of publication and mention of the grant of the patent: **27.05.2026**
(21) Application number: 21967551.9
(22) Date of filing: 14.12.2021
(51) Int. Cl.: G06T 7/246, G02B 27/00, G06F 3/01

(54) **TARGET TRACKING METHOD AND APPARATUS**
ZIELVERFOLGUNGSVERFAHREN UND -VORRICHTUNG
PROCÉDÉ ET APPAREIL DE SUIVI DE CIBLE

(43) Date of publication of application: 07.08.2024
(73) Proprietor: Huawei Technologies Co., Ltd., Shenzhen, Guangdong 518129 (CN)
(72) Inventor: LI, Meng, Shenzhen, Guangdong 518129 (CN)
(74) Representative: Körber, Martin Hans
(86) International application number: PCT/CN2021/137865
(87) International publication number: WO 2023/108411

(56) References cited:
- CN-A- 109 544 590
- CN-A- 110 910 423
- CN-A- 111 260 692
- CN-A- 113 642 546
- US-A1- 2016 085 302
- US-A1- 2018 239 412
- US-A1- 2019 235 624
- US-A1- 2021 295 532
- NAZ NAJIA ET AL: "Efficient Processing of Image Processing Applications on CPU/GPU", vol. 2020, 10 October 2020 (2020-10-10), CH, pages 1 - 14, XP093208481, ISSN: 1024-123X, Retrieved from the Internet <URL:http://downloads.hindawi.com/journals/mpe/2020/4839876.xml> DOI: 10.1155/2020/4839876

## Description

### TECHNICAL FIELD

Embodiments of this application relate to the field of electronic technologies, and in particular, to a target tracking method and apparatus.

### BACKGROUND

With development of a human-computer interaction technology, an eye tracking technology is applied increasingly widely in the field of human-computer interaction. The eye tracking technology is a technology for locating a line of sight of a human eye, integrates knowledge of discipline fields such as machinery, electronics, and optics, and has a good application prospect in fields such as artificial intelligence and machine vision, for example, used for fatigue monitoring, virtual reality, and communication auxiliary tools.

An existing eye tracking apparatus captures a raw (RAW) image by using an image sensor (image sensor), where the raw image includes an image of an eyeball of a user; converts the raw image to a red, green, and blue (red green blue, RGB) image by using an image signal processor (image signal processor, ISP); performs feature extraction on the RGB image by using a central processing unit (central processing unit, CPU), to obtain feature information of the RGB image, and calculates an elliptic equation of the eyeball based on the feature information; and performs eye tracking on the eyeball based on an elliptic equation calculated for each frame of a plurality of consecutive frames of raw images.

However, each frame of raw image captured by the image sensor in the existing eye tracking apparatus needs to be transmitted to the image signal processor for processing, and calculation complexity of the image signal processor is large. Therefore, computing resource consumption is high. In addition, in some cases, a target may not move or a motion degree is small. Therefore, power consumption is high. In conclusion, overall performance of the existing eye tracking apparatus is poor.

US 2018/0239412 A1 discloses a personal computer system comprises a visual display, an imaging device adapted to provide eye-tracking data by imaging at least one eye of a viewer of the visual display, and identifying means for recognizing the viewer with reference to one of a plurality of predefined personal profiles.

### SUMMARY

This application provides a target tracking method and apparatus, to improve overall performance of the target tracking apparatus. To achieve the foregoing objective, the following technical solutions are used in this application. The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

According to a first aspect, this application provides a target tracking apparatus. The apparatus may include an image sensor, a controller, an image signal processor, and an event processor. A processing capability of the image signal processor is different from a processing capability of the event processor. The image sensor is configured to: capture a first raw (RAW) image, and send the first raw image to the controller. The controller is configured to: determine a motion distance, in two adjacent frames of raw images, of a target object in the first raw image, where the first raw image is a next frame of image of the two adjacent frames of raw images; determine a target processor from the image signal processor and the event processor based on the motion distance, where a processing capability of the target processor matches the motion distance; and perform target tracking on the target object based on the first raw image by using the target processor.

It should be noted that both the image signal processor and the event processor in this application may be dedicated processors. The image signal processor is a processor with a high processing capability, has a complex function and high processing precision, and can perform processing with high computing complexity on an image, for example, domain format conversion, white balance correction, and gamma correction. However, power consumption is high, and a computing resource is wasted. The event processor is a processor with a low processing capability, has a simple function, saves computing resources, has low power consumption, and can perform less complex processing on an image, for example, extracting an event data stream, but has low processing precision.

According to the target tracking apparatus provided in this application, the controller may flexibly select, based on the motion distance, a target processor whose processing capability matches the motion distance, to perform target tracking on the target object, that is, determine, based on the motion distance, whether a processor with a high processing capability needs to be used to perform target tracking to improve calculation precision, or a processor with a low processing capability may be used to perform target tracking to save computing resources and reduce power consumption, to improve overall performance of the target tracking apparatus.

In addition, the target tracking apparatus provided in this application needs only one image sensor to capture a raw image, and different dedicated processors are selected to process the raw image captured by the image sensor, to implement conversion from a raw domain to an RGB domain or conversion from a raw domain to an event data stream, so that costs and overheads of the sensor can be reduced.

In a possible implementation, if the target processor is the image signal processor, the image signal processor is configured to: convert the first raw image to an RGB image, and send the RGB image to the controller; or if the target processor is the event processor, the event processor is configured to: convert the first raw image to an event data stream, and send the event data stream to the controller, where the event data stream indicates a brightness change status of a pixel in the first raw image. The controller is specifically configured to perform target tracking on the target object based on the RGB image or the event data stream.

It should be further noted that the event data stream in this application describes a brightness change status of a pixel in the first raw image. The event data stream includes a plurality of pieces of event data, each of the plurality of pieces of event data describes an event, and a brightness change of any pixel in the first raw image is referred to as an event.

In a possible implementation, the controller is specifically configured to determine the target processor from the image signal processor and the event processor based on the motion distance and a preset distance threshold.

In a possible implementation, the processing capability of the image signal processor is higher than the processing capability of the event processor, and the controller is specifically configured to: if the motion distance is greater than the distance threshold, determine the image signal processor as the target processor; or if the motion distance is less than or equal to the distance threshold, determine the event processor as the target processor.

According to the target tracking apparatus provided in this application, when the motion distance of the target object in the two adjacent frames is large, the image signal processor with higher calculation precision may be matched and used to process the first raw image. On the contrary, when the motion distance of the target object in the two adjacent frames is small or the target object does not move, the event processor with low power consumption and simple calculation may be matched and used to process the first raw image. This helps balance allocation of computing resources and power consumption, to improve overall performance of a system.

In a possible implementation, the controller is specifically configured to determine first location information based on the first raw image by using the target processor, where the first location information indicates a location of the target object at a capturing moment of the first raw image.

In a possible implementation, the controller is specifically configured to: determine second location information based on a second raw image, where the second raw image is a former frame of raw image in the two adjacent frames of raw images, and the second location information indicates a location of the target object at a capturing moment of the second raw image; determine third location information based on a third raw image, where the third raw image is a latter frame of raw image in the two adjacent frames of raw images, and the third location information indicates a location of the target object at a capturing moment of the third raw image; and determine the motion distance based on the second location information and the third location information.

According to the target tracking apparatus provided in this application, based on a real-time motion status of the target object in previous two frames, a processor whose processing capability matches the motion status is selected to process a current frame of raw image, so that precision is higher.

In a possible implementation, the target object includes an eyeball.

According to a second aspect, this application further provides a target tracking method. The method may include: capturing a first raw (RAW) image; determining a motion distance, in two adjacent frames of raw images, of a target object in the first raw image, where the first raw image is a next frame of image of the two adjacent frames of raw images; determining a target processor from the image signal processor and the event processor based on the motion distance, where a processing capability of the image signal processor is different from a processing capability of the event processor, and a processing capability of the target processor matches the motion distance; and performing target tracking on the target object based on the first raw image by using the target processor.

In a possible implementation, the performing target tracking on the target object based on the first raw image by using the target processor includes: if the target processor is the image signal processor, converting the first raw image to an RGB image by using the image signal processor; or if the target processor is the event processor, converting the first raw image to an event data stream by using the event processor, where the event data stream indicates a brightness change status of a pixel in the first raw image; and performing target tracking on the target object based on the RGB image or the event data stream.

In a possible implementation, the determining a target processor from the image signal processor and the event processor based on the motion distance includes: determining the target processor from the image signal processor and the event processor based on the motion distance and a preset distance threshold.

In a possible implementation, the processing capability of the image signal processor is higher than the processing capability of the event processor. The determining the target processor from the image signal processor and the event processor based on the motion distance and a preset distance threshold includes: if the motion distance is greater than the distance threshold, determining the image signal processor as the target processor; or if the motion distance is less than or equal to the distance threshold, determining the event processor as the target processor.

In a possible implementation, the performing target tracking on the target object based on the first raw image by using the target processor includes: determining first location information based on the first raw image by using the target processor, where the first location information indicates a location of the target object at a capturing moment of the first raw image.

In a possible implementation, the determining a motion distance, in two adjacent frames of raw images, of a target object in the first raw image includes: determining second location information based on a second raw image, where the second raw image is a former frame of raw image in the two adjacent frames of raw images, and the second location information indicates a location of the target object at a capturing moment of the second raw image; determining third location information based on a third raw image, where the third raw image is a latter frame of raw image in the two adjacent frames of raw images, and the third location information indicates a location of the target object at a capturing moment of the third raw image; and determining the motion distance based on the second location information and the third location information.

In a possible implementation, the target object includes an eyeball.

According to a third aspect, this application further provides a control method. The method may include: obtaining a first raw (RAW) image; determining a motion distance, in two adjacent frames of raw images, of a target object in the first raw image, where the first raw image is a next frame of image of the two adjacent frames of raw images; determining a target processor from the image signal processor and the event processor based on the motion distance, where a processing capability of the image signal processor is different from a processing capability of the event processor, and a processing capability of the target processor matches the motion distance; and performing target tracking on the target object based on the first raw image by using the target processor.

In a possible implementation, the performing target tracking on the target object based on the first raw image by using the target processor includes: if the target processor is the image signal processor, converting the first raw image to an RGB image by using the image signal processor; or if the target processor is the event processor, converting the first raw image to an event data stream by using the event processor, where the event data stream indicates a brightness change status of a pixel in the first raw image; and performing target tracking on the target object based on the RGB image or the event data stream.

In a possible implementation, the determining a target processor from the image signal processor and the event processor based on the motion distance includes: determining the target processor from the image signal processor and the event processor based on the motion distance and a preset distance threshold.

The processing capability of the image signal processor is higher than the processing capability of the event processor. The determining the target processor from the image signal processor and the event processor based on the motion distance and a preset distance threshold includes: if the motion distance is greater than the distance threshold, determining the image signal processor as the target processor; or if the motion distance is less than or equal to the distance threshold, determining the event processor as the target processor.

In a possible implementation, the performing target tracking on the target object based on the first raw image by using the target processor includes: determining first location information based on the first raw image by using the target processor, where the first location information indicates a location of the target object at a capturing moment of the first raw image.

In a possible implementation, the determining a motion distance, in two adjacent frames of raw images, of a target object in the first raw image includes: determining second location information based on a second raw image, where the second raw image is a former frame of raw image in the two adjacent frames of raw images, and the second location information indicates a location of the target object at a capturing moment of the second raw image; determining third location information based on a third raw image, where the third raw image is a latter frame of raw image in the two adjacent frames of raw images, and the third location information indicates a location of the target object at a capturing moment of the third raw image; and determining the motion distance based on the second location information and the third location information.

In a possible implementation, the target object includes an eyeball.

According to a fourth aspect, this application further provides a controller. The controller may include units configured to implement the method according to any one of the third aspect and the possible implementations of the third aspect.

According to a fifth aspect, this application further provides a controller. The controller may include a processor and a communication interface, the processor is coupled to the communication interface, the communication interface is configured to provide data and/or information for the processor, and the processor is configured to perform the method according to any one of the third aspect and the possible implementations of the third aspect.

According to a sixth aspect, this application further provides a computer-readable storage medium. The computer-readable storage medium stores a computer program, and when being executed by at least one processor, the computer program is used to implement the method in any one of the first aspect and the possible implementations of the first aspect.

According to a seventh aspect, this application further provides a computer program product. When being executed by at least one processor, the computer program product is used to implement the method in any one of the first aspect and the possible implementations of the first aspect.

The target tracking method, the control method, the controller, the computer storage medium, and the computer program product provided in this application are all used to perform the target tracking method provided above. Therefore, for beneficial effects that can be achieved by the target tracking method, the control method, the controller, the computer storage medium, and the computer program product, refer to the beneficial effects in the target tracking method provided above. Details are not described herein again.

### BRIEF DESCRIPTION OF DRAWINGS

FIG. 1 is a diagram of an application scenario of a target tracking apparatus according to an embodiment of this application;
FIG. 2 is a schematic flowchart of a target tracking apparatus 100 according to an embodiment of this application;
FIG. 3 is a schematic block diagram of a target tracking method 200 according to an embodiment of this application;
FIG. 4 is a schematic block diagram of a target tracking apparatus 300 according to an embodiment of this application; and
FIG. 5 is a diagram of a structure of a target tracking apparatus 400 according to an embodiment of this application.

### DESCRIPTION OF EMBODIMENTS

The following describes the technical solutions in embodiments of this application with reference to the accompanying drawings in embodiments of this application. It is clearly that the described embodiments are some rather than all of embodiments of this application. All other embodiments obtained by a person of ordinary skill in the art based on embodiments of this application without creative efforts shall fall within the protection scope of this application.

In embodiments of this application, "first" or "second" and similar words do not indicate any order, quantity, or importance, but are merely used to distinguish between different parts. Likewise, terms such as "a/an" and "one" do not indicate a quantity limitation, but mean at least one. "Coupling" and similar terms are not limited to a direct physical or mechanical connection, but may include an electrical connection. Regardless of direct or indirect, "coupling" is equivalent to a connection in a broad sense.

The term "example" or "for example" in embodiments of this application means "used as an example, an illustration, or a description". Any embodiment or design scheme described as "example" or "for example" in embodiments of this application should not be explained as being more preferred or having more advantages than another embodiment or design scheme. To be precise, use of the word like "example" or "for example" is intended to present a relative concept in a specific manner. In the descriptions of embodiments of this application, unless otherwise stated, "a plurality of" means two or more than two. For example, a plurality of processors mean at least two processors.

An existing head mounted device includes an eye tracking apparatus for determining a gaze direction of a user. The eye tracking apparatus captures a raw image by using an image sensor, where the raw image includes an image of an eyeball of a user; converts the raw image to an RGB image by using an ISP; performs feature extraction on the RGB image by using a CPU, to obtain feature information of the RGB image, and obtains an elliptic equation of the eyeball through calculation based on the feature information; and performs eye tracking on the eyeball based on an elliptic equation calculated for each frame of a plurality of consecutive frames of raw images.

However, each frame of raw image captured by the image sensor in the existing eye tracking apparatus needs to be transmitted to the image signal processor for processing, and calculation complexity of the image signal processor is large. Therefore, computing resource consumption is high. In addition, in some cases, a target may not move or a motion degree is small. Therefore, power consumption is high.

In addition, due to limitations such as a bandwidth between the image sensor and the ISP and a processing speed of an eye tracking algorithm performed by the CPU, it is difficult to achieve a very high system frame rate (for example, higher than 240 Hz). Even if a high frame rate can be achieved, computing resource consumption is usually high. Therefore, power consumption is high.

In conclusion, overall performance of the existing eye tracking apparatus is poor.

To resolve the foregoing problem, embodiments of this application provide a target tracking method and apparatus, to improve overall performance of the target tracking apparatus.

The following first describes a target tracking apparatus provided in embodiments of this application.

Optionally, the target tracking apparatus provided in this application may be used in a terminal. The terminal may be a transportation tool or an intelligent device. For example, the terminal may be a vehicle (such as a self-driving vehicle, an intelligent vehicle, an electric vehicle, or a digital vehicle), an uncrewed aerial vehicle, a track vehicle, a bicycle, or a traffic light. For another example, the terminal may be a mobile phone, a tablet computer, a notebook computer, a personal digital assistant, a sales terminal, a vehicle-mounted computer, an augmented reality (augmented reality, AR) device, a virtual reality (virtual reality, VR) device, a wearable device, or a vehicle-mounted terminal.

Optionally, the target tracking apparatus may perform target tracking on a plurality of target objects. This is not limited in this application.

In a possible implementation, the target object may include an eyeball of a user, and the target tracking apparatus may perform eye tracking on the eyeball.

Optionally, the target tracking apparatus provided in this application may be applicable to various target tracking application scenarios. It should be noted that the target tracking apparatus may be used in an application scenario of target tracking, and certainly may also be used in an application scenario of target detection. This is not limited in this application.

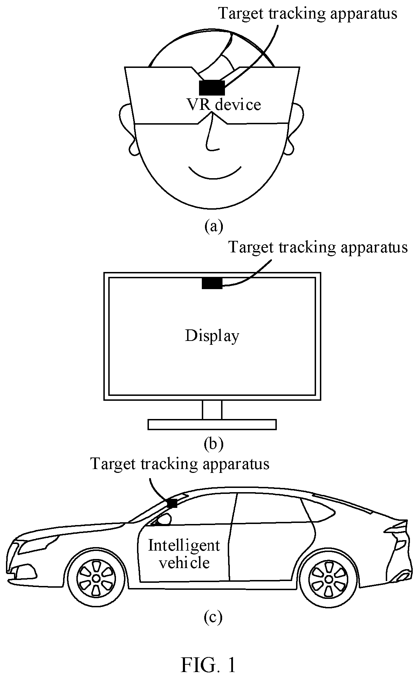

For example, FIG. 1 is a diagram of an application scenario of a target tracking apparatus according to an embodiment of this application. As shown in (a) in FIG. 1, the target tracking apparatus may be used in a VR device. The VR device may perform eye tracking on an eyeball (for example, a pupil) of a user by using the target tracking apparatus, to control a VR game. As shown in (b) in FIG. 1, the target tracking apparatus may be used in a display. The display may perform eye tracking on an eyeball (for example, a pupil) of a user by using the target tracking apparatus, to identify an area of concern of the user. As shown in (c) in FIG. 1, the target tracking apparatus may be used in an intelligent vehicle. The intelligent vehicle may perform eye tracking on an eyeball (for example, a pupil) of a vehicle owner by using the target tracking apparatus, to detect whether the driver is tired while driving.

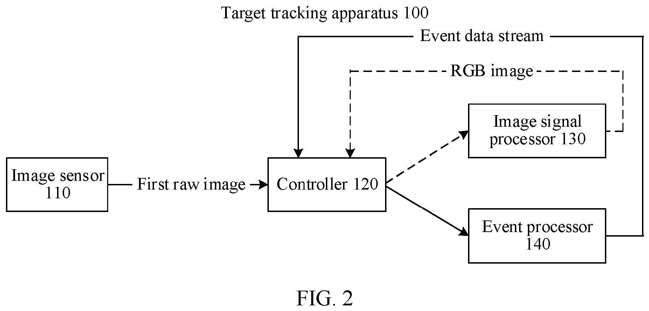

FIG. 2 is a diagram of a structure of a target tracking apparatus 100 according to an embodiment of this application. As shown in FIG. 2, the apparatus 100 may include an image sensor 110, a controller 120, an image signal processor 130, and an event processor 140. A processing capability of the image signal processor 130 is different from a processing capability of the event processor 140. The image sensor 110 is configured to: capture a first raw (RAW) image, and send the first raw image to the controller. The controller 120 is configured to: determine a motion distance, in two adjacent frames of raw images, of a target object in the first raw image, where the first raw image is a next frame of image of the two adjacent frames of raw images; determine a target processor from the image signal processor 130 and the event processor 140 based on the motion distance, where a processing capability of the target processor matches the motion distance; and perform target tracking on the target object based on the first raw image by using the target processor.

For example, the image sensor 110 is a complementary metal-oxide-semiconductor (complementary metal-oxide-semiconductor, CMOS) image sensor.

It should be noted that the raw image in this application is an "unprocessed" image, is raw data of a digital signal converted by the image sensor 150 from a captured light source signal, and records raw information of the image sensor. Optionally, the first raw image may further record some metadata (metadata) generated during photographing, for example, a sensitivity setting, a shutter speed, an aperture value, and white balance.

In a possible implementation, the controller 120 is specifically configured to determine the target processor from the image signal processor and the event processor based on the motion distance and a preset distance threshold.

In a possible implementation, the controller 120 is specifically configured to: if the motion distance is greater than the distance threshold, determine the image signal processor as the target processor, or if the motion distance is less than or equal to the distance threshold, determine the event processor as the target processor.

It should be noted that both the image signal processor 130 and the event processor 140 in this application are dedicated processors. The image signal processor 130 is a processor with a high processing capability, has a complex function and high processing precision, and performs processing with high computing complexity on an image, for example, domain format conversion, white balance correction, and gamma (gamma) correction. However, power consumption is high, and a computing resource is wasted. The event processor 140 is a processor with a low processing capability, has a simple function, saves computing resources, has low power consumption, and performs less complex processing on an image, for example, extracting an event data stream, but has low processing precision.

It should be further noted that the event data stream in this application describes a brightness change status of a pixel in the first raw image. The event data stream includes a plurality of pieces of event data, each of the plurality of pieces of event data describes an event, and a brightness change of any pixel in the first raw image is referred to as an event.

For example, event data is usually represented as (x, y, t, p), where (x, y) is coordinates of a pixel at which an event occurs, t is a moment at which the event occurs, and p is a polarity of the event (for example, p=0 indicates that brightness of the pixel is reduced compared with that during previous sampling, and p=1 indicates that brightness of the pixel is increased compared with that during the previous sampling).

Optionally, the target tracking in this application may include determining location information of a target and/or determining movement trajectory information of the target.

In a possible implementation, the controller 120 is specifically configured to determine first location information based on the first raw image by using the target processor, where the first location information indicates a location of the target object at a capturing moment of the first raw image.

It should be noted that the motion distance in this application may be understood as a distance at which the target object moves in the two adjacent frames of raw images, that is, a location offset of the target object in the two adjacent frames of raw images.

Optionally, the controller 120 may determine the motion distance in a plurality of manners. This is not limited in this embodiment of this application.

In a possible implementation, the controller 120 may receive motion information from another apparatus, where the motion information indicates the motion distance.

In another possible implementation, the controller 120 may determine the motion distance based on the two adjacent frames of raw images.

For example, the controller 120 is specifically configured to: determine second location information based on a second raw image, where the second raw image is a former frame of raw image in the two adjacent frames of raw images, and the second location information indicates a location of the target object at a capturing moment of the second raw image; determine third location information based on a third raw image, where the third raw image is a latter frame of raw image in the two adjacent frames of raw images, and the third location information indicates a location of the target object at a capturing moment of the third raw image; and determine the motion distance based on the second location information and the third location information.

In a possible implementation, if the target processor is the image signal processor 130, the image signal processor 130 is configured to: convert the first raw image to an RGB image, and send the RGB image to the controller 120; or if the target processor is the event processor 140, the event processor 140 is configured to: convert the first raw image to an event data stream, and send the event data stream to the controller 120, where the event data stream indicates a brightness change status of a pixel in the first raw image. Correspondingly, the controller 120 is specifically configured to perform target tracking on the target object based on the RGB image or the event data stream.

It should be noted that a process in which the image signal processor 130 converts the first raw image to the RGB image (that is, domain format conversion) and a process in which the event processor 140 converts the first raw image to the event data stream (that is, dynamic information extraction) are not limited in this application. For details, refer to the conventional technology.

For example, the target object is an eyeball. The controller 120 is specifically configured to: perform feature extraction on the RGB image to obtain information about an edge point of at least one object in the RGB image (the information about the edge point may include a location of the edge point in the RGB image), where the at least one object includes the eyeball; determine information about an edge point of the eyeball based on a geometric feature (for example, a geometric relationship between an eye corner and an orbit) of the eyeball and the information about the edge point of the at least one object; and determine a first elliptic equation based on the information about the edge point of the eyeball and a second elliptic equation, where the first elliptic equation indicates a location of the eyeball at a capturing moment of the first raw image, the second elliptic equation is determined based on a third raw image, the second elliptic equation indicates a location of the eyeball at a capturing moment of the third raw image, and the third raw image is a previous frame of raw image of the first raw image.

It should be noted that, for a specific method for performing eye tracking on an eyeball in this application, refer to the conventional technology, for example, performing eye tracking based on a location of a through hole on the eyeball. This is not limited in this application.

For example, the target object is an eyeball, and first event data in the event data stream is (x₁, y₁, t₁, p₁). The controller 120 is specifically configured to: calculate a distance k₁ between a pixel (x₁, y₁) and a second elliptic equation f(x, y)=(x-m₁)²/a₁²+(y-n₁)²/b²-1=0, where the second elliptic equation indicates the location of the eyeball at the capturing moment of the third raw image, and the third raw image is a previous frame of raw image of the first raw image; determine, based on the distance k₁ and a preset distance threshold k₀, whether the pixel (x₁, y₁) is an edge point of the eyeball, and so on, to obtain the information about the edge point of the eyeball; and determine a first elliptic equation based on the information about the edge point of the eyeball and the second elliptic equation, where the first elliptic equation indicates the location of the eyeball at the capturing moment of the first raw image.

Optionally, a specific form of each component in the apparatus 100 is not limited in this application.

In a possible implementation, the image sensor 110, the controller 120, and the event processor 140 may be integrated together, for example, integrated in a chip 1. The image signal processor 130 is an independent chip, for example, a chip 2.

In another possible implementation, the controller 120, the image signal processor 130, and the event processor 140 may be integrated together, for example, integrated in a chip 3. The image sensor 110 is an independent chip, for example, a chip 4.

According to the target tracking apparatus provided in this application, the controller may flexibly select, based on the motion distance, a processor whose processing capability matches the motion distance, to perform target tracking, that is, determine, based on the motion distance, whether a processor with a high processing capability needs to be used to perform target tracking to improve calculation precision, or a processor with a low processing capability may be used to perform target tracking to save computing resources and reduce power consumption, to improve overall performance of the target tracking apparatus.

In addition, the target tracking apparatus provided in this application needs only one image sensor to capture a raw image, and different dedicated processors are selected to process the raw image captured by the image sensor, to implement conversion from a raw domain to an RGB domain or conversion from a raw domain to an event data stream, so that costs and overheads of the sensor can be reduced.

The following further describes a target tracking method provided in embodiments of this application.

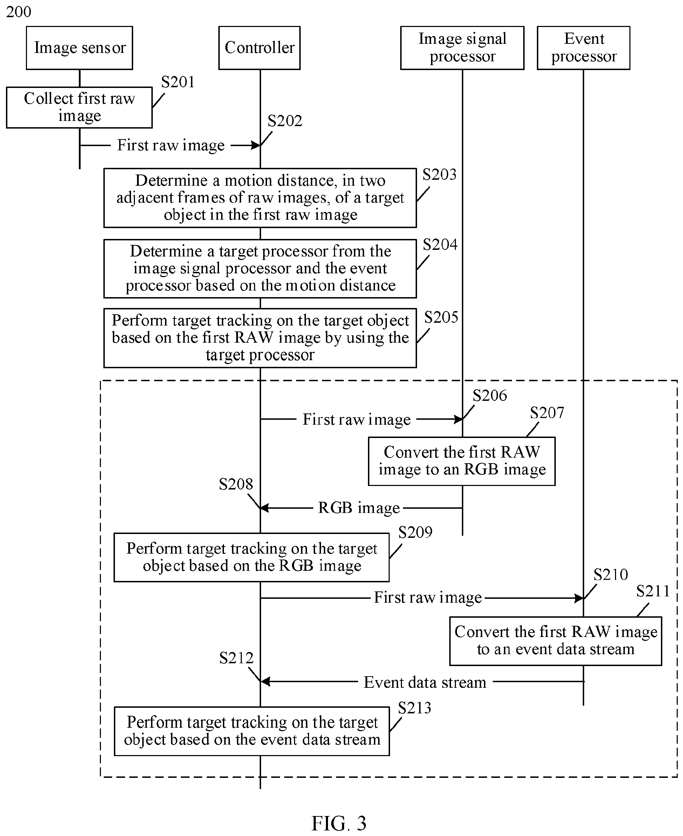

FIG. 3 is a schematic flowchart of a target tracking method 200 according to an embodiment of this application. As shown in FIG. 3, the method 200 may include the following steps. It should be noted that the following steps may be performed in various sequences and/or simultaneously, and are not limited to the execution sequence shown in FIG. 3.

It should be noted that the following describes the method 200 by using an example in which the method 200 is applied to the image tracking apparatus 100 shown in FIG. 2. However, this application is not limited thereto. Optionally, the method 200 may be applied to any apparatus that can implement the following steps.

S201: An image sensor captures a first raw image.

S202: The image sensor sends the first raw image to a controller. Correspondingly, the controller receives the first raw image from the image sensor.

Optionally, S201 and S202 describe a manner in which the controller obtains the first raw image. However, this application is not limited thereto. The controller may alternatively obtain the first raw image in another manner. This is not limited in this application.

S203: The controller determines a motion distance, in two adjacent frames of raw images, of a target object in the first raw image, where the first raw image is a next frame of image of the two adjacent frames of raw images.

Optionally, the target object may include an eyeball.

Optionally, before determining the motion distance, in the two adjacent frames of raw images, of the target object in the first raw image, the controller may determine second location information based on a second raw image, where the second raw image is a former frame of raw image in the two adjacent frames of raw images, and the second location information indicates a location of the target object at a capturing moment of the second raw image; and determine third location information based on a third raw image, where the third raw image is a latter frame of raw image in the two adjacent frames of raw images, and the third location information indicates a location of the target object at a capturing moment of the third raw image. Correspondingly, the controller may determine the motion distance based on the second location information and the third location information.

S204: The controller determines a target processor from the image signal processor and the event processor based on the motion distance, where a processing capability of the image signal processor is different from a processing capability of the event processor, and a processing capability of the target processor matches the motion distance.

Specifically, the controller may determine the target processor from the image signal processor and the event processor based on the motion distance and a preset distance threshold.

The processing capability of the image signal processor is higher than the processing capability of the event processor. S204 may include: If the motion distance is greater than the distance threshold, the controller determines the image signal processor as the target processor, or if the motion distance is less than or equal to the distance threshold, the controller determines the event processor as the target processor.

S205: The controller performs target tracking on the target object based on the first raw image by using the target processor.

In a possible implementation, if the target processor is the image signal processor, S205 may include S206 to S209.

S206: The controller sends the first raw image to the image signal processor. Correspondingly, the image signal processor receives the first raw image from the controller.

S207: The image signal processor converts the first raw image to an RGB image.

S208: The image signal processor sends the RGB image to the controller. Correspondingly, the controller receives the RGB image from the image signal processor.

S209: The controller performs target tracking on the target object based on the RGB image.

In another possible implementation, if the target processor is the event processor, S205 may include S210 to S213.

S210: The controller sends the first raw image to the event processor. Correspondingly, the event processor receives the first raw image from the controller.

S211: The event processor converts the first raw image to an event data stream, where the event data stream indicates a brightness change status of a pixel in the first raw image.

S212: The event processor sends the event data stream to the controller. Correspondingly, the controller receives the event data stream from the event processor.

S213: The controller performs target tracking on the target object based on the event data stream.

In a possible implementation, that the controller performs target tracking on the target object based on the RGB image or the event data stream may include: determining first location information of the target object based on the RGB image or the event data stream, where the first location information indicates a location of the target object at a capturing moment of the first raw image.

It should be noted that, for steps that are not described in detail in the method 200, refer to descriptions of related parts in the apparatus 100. To avoid repetition, details are not described herein.

With reference to the target tracking apparatus shown in FIG. 2, the following describes a schematic flowchart of a target tracking method according to an embodiment of this application. It should be noted that the following steps may be performed in various sequences and/or simultaneously, and an execution sequence of the steps should not be limited to a sequence indicated by sequence numbers of the steps. The procedure includes the following steps:
(1) The image sensor captures a raw image 1, where the raw image 1 includes an eyeball object, and the eyeball object includes a pupil.
(2) The image sensor sends the raw image 1 to the controller.
(3) The controller sends the raw image 1 to the image signal processor based on preset control information 1. Correspondingly, the image signal processor receives the raw image 1 from the controller.
(4) The image signal processor converts the raw image 1 to an RGB image 1.
(5) The image signal processor sends the RGB image 1 to the controller. Correspondingly, the controller receives the RGB image 1 from the image signal processor.
(6) The controller performs eye tracking on the eyeball based on the RGB image 1, to obtain location information 1, where the location information 1 indicates a location of the eyeball at a capturing moment of the raw image 1.
(7) The image sensor captures a raw image 2, where the raw image 2 includes the eyeball object, and the raw image 2 is a next frame of image of the raw image 1.
(8) The image sensor sends the raw image 2 to the controller.
(9) The controller sends the raw image 2 to the image signal processor based on the control information 1. Correspondingly, the image signal processor receives the raw image 2 from the controller.
(10) The image signal processor converts the raw image 2 to an RGB image 2.
(11) The image signal processor sends the RGB image 2 to the controller. Correspondingly, the controller receives the RGB image 2 from the image signal processor.
(12) The controller performs eye tracking on the eyeball based on the RGB image 2, to obtain location information 2, where the location information 2 indicates a location of the eyeball at a capturing moment of the raw image 2.
(13) The image sensor captures a raw image 3, where the raw image 3 includes the eyeball object, and the raw image 3 is a next frame of image of the raw image 2.
(14) The image sensor sends the raw image 3 to the controller.
(15) The controller determines, based on the location information 1 and the location information 2, a motion distance of the eyeball from the sampling moment of the raw image 1 to the sampling moment of the raw image 2.
(16) The controller determines, based on the motion distance and a preset distance threshold, a target processor from the image signal processor and the event processor, where a processing capability of the target processor matches the motion distance.

Specifically, if the motion distance is greater than the distance threshold, the controller determines the image signal processor as the target processor, and continues to perform steps (17) to (20); or if the motion distance is less than or equal to the distance threshold, the controller determines the event processor as the target processor, and continues to perform steps (21) to (24).
(17) The controller sends the raw image 3 to the event processor. Correspondingly, the event processor receives the raw image 3 from the controller.
(18) The event processor converts the raw image 3 to an event data stream.
(19) The event processor sends the event data stream to the controller. Correspondingly, the controller receives the event data stream from the event processor.
(20) The controller performs eye tracking on the eyeball based on the event data flow.
(21) The controller sends the raw image 3 to the image signal processor. Correspondingly, the image signal processor receives the raw image 3 from the controller.
(22) The image signal processor converts the raw image 3 to an RGB image 3.
(23) The image signal processor sends the RGB image 3 to the controller. Correspondingly, the controller receives the RGB image 3 from the image signal processor.
(24) The controller performs eye tracking on the eyeball based on the RGB image 3.

Optionally, the controller may perform target tracking on the target object based on each frame of raw image after the raw image 3 by using a procedure similar to (15) to (24). This is not limited in this embodiment of this application.

The foregoing describes the target tracking method provided in embodiments of this application. The following further describes the controller in the target tracking apparatus.

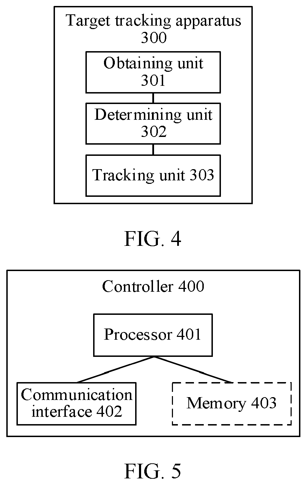

FIG. 4 is a schematic block diagram of a controller 300 according to an embodiment of this application. As shown in FIG. 4, the controller 300 may be used in the target tracking apparatus 100, and may be a controller in the target tracking apparatus 100. The controller 300 may include an obtaining unit 301, a determining unit 302, and a tracking unit 303.

The obtaining unit 301 is configured to obtain a first raw (RAW) image. The determining unit 302 is configured to: determine a motion distance, in two adjacent frames of raw images, of a target object in the first raw image, where the first raw image is a next frame of image of the two adjacent frames of raw images; and determine a target processor from the image signal processor and the event processor based on the motion distance, where a processing capability of the image signal processor is different from a processing capability of the event processor, and a processing capability of the target processor matches the motion distance. The tracking unit 303 is configured to perform target tracking on the target object based on the first raw image by using the target processor.

In a possible implementation, the determining unit 302 is specifically configured to determine the target processor from the image signal processor and the event processor based on the motion distance and a preset distance threshold.

In a possible implementation, the processing capability of the image signal processor is higher than the processing capability of the event processor, and the determining unit 302 is specifically configured to: if the motion distance is greater than the distance threshold, determine the image signal processor as the target processor; or if the motion distance is less than or equal to the distance threshold, determine the event processor as the target processor.

In a possible implementation, if the target processor is the image signal processor, the tracking unit 303 is configured to convert the first raw image to an RGB image by using the image signal processor; or if the target processor is the event processor, the tracking unit 303 is configured to convert the first raw image to an event data stream by using the event processor, where the event data stream indicates a brightness change status of a pixel in the first raw image. The tracking unit 303 is configured to perform target tracking on the target object based on the RGB image or the event data stream.

In a possible implementation, the tracking unit 303 is specifically configured to determine first location information based on the first raw image by using the target processor, where the first location information indicates a location of the target object at a capturing moment of the first raw image.

In a possible implementation, the determining unit 302 is specifically configured to: determine second location information based on a second raw image, where the second raw image is a former frame of raw image in the two adjacent frames of raw images, and the second location information indicates a location of the target object at a capturing moment of the second raw image; determine third location information based on a third raw image, where the third raw image is a latter frame of raw image in the two adjacent frames of raw images, and the third location information indicates a location of the target object at a capturing moment of the third raw image; and determine the motion distance based on the second location information and the third location information.

One or more of the units in the embodiment shown in FIG. 4 may be implemented by using software, hardware, firmware, or a combination thereof. The software or firmware includes but is not limited to computer program instructions or code, and may be executed by a hardware processor. The hardware includes but is not limited to various integrated circuits, such as a central processing unit (CPU, Central Processing Unit), a digital signal processor (DSP, Digital Signal Processor), a field programmable gate array (FPGA, Field Programmable Gate Array), or an application-specific integrated circuit (ASIC, Application-Specific Integrated Circuit).

FIG. 5 is a schematic block diagram of a controller 400 according to an embodiment of this application. The controller 400 may include a processor 401 and a communication interface 402. The processor 401 is coupled to the communication interface 402.

The processor 401 in this embodiment of this application may include one or more processing units. Optionally, the processing unit includes but is not limited to a central processing unit (Central Processing Unit, CPU), a general purpose processor, a digital signal processor (Digital Signal Processor, DSP), an application-specific integrated circuit (Application Specific Integrated Circuit, ASIC), a field programmable gate array (Field Programmable Gate Array, FPGA), a discrete gate, a transistor logic device, a discrete hardware component, or the like. The general-purpose processor may be a microprocessor, a microcontroller, any conventional processor, or the like.

For example, the processor 401 is configured to: obtain a first raw (RAW) image through the communication interface; determine a motion distance, in two adjacent frames of raw images, of a target object in the first raw image, where the first raw image is a next frame of image of the two adj acent frames of raw images; determine a target processor from the image signal processor and the event processor based on the motion distance, where a processing capability of the image signal processor is different from a processing capability of the event processor, and a processing capability of the target processor matches the motion distance; and perform target tracking on the target object based on the first raw image by using the target processor.

In an optional example, a person skilled in the art may understand that the controller 400 may be specifically the controller in the foregoing embodiment of the method 200, and the controller 400 may be configured to perform procedures and/or steps corresponding to the controller in the foregoing embodiment of the method 200. To avoid repetition, details are not described herein again.

Optionally, the controller 400 may further include a memory 403.

The memory 403 may be a volatile memory or a non-volatile memory, or may include both a volatile memory and a non-volatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

Specifically, the memory 403 is configured to store program code and instructions of the target tracking apparatus. Optionally, the memory 403 is further configured to store information and/or data obtained in a process in which the processor 401 performs the foregoing embodiment of the method 200, for example, a RAW image and location information of the target object.

Optionally, the memory 403 may be an independent device or may be integrated into the processor 401.

It should be noted that FIG. 5 shows only a simplified design of the controller 400. In actual application, the controller 400 may further include other necessary elements, including but not limited to any quantity of communication interfaces, processors, selectors, memories, and the like. All controllers 400 that can implement this application fall within the protection scope of this application.

In a possible design, the controller 400 may be a chip. Optionally, the chip may further include one or more memories, configured to store computer-executable instructions. When the chip apparatus runs, the processor may execute the computer-executable instructions stored in the memory, so that the chip performs the foregoing target tracking method.

Optionally, the chip apparatus may be a field programmable gate array, a dedicated integrated chip, a system chip, a central processing unit, a network processor, a digital signal processing circuit, a microcontroller, a programmable controller, or another integrated chip for implementing related functions.

An embodiment of this application further provides a computer-readable storage medium. The computer-readable storage medium stores computer instructions. When the computer instructions are run on a computer, the target tracking method described in the foregoing method embodiment is implemented.

An embodiment of this application further provides a computer program product. When the computer program product runs on a processor, the target tracking method described in the foregoing method embodiment is implemented.

The target tracking apparatus, the computer-readable storage medium, the computer program product, or the chip provided in embodiments of this application are all configured to perform the corresponding target tracking method provided above. Therefore, for beneficial effects that can be achieved by the target tracking apparatus, the computer-readable storage medium, the computer program product, or the chip, refer to the beneficial effects in the corresponding target tracking method provided above. Details are not described herein again.

In the several embodiments provided in this application, it should be understood that the disclosed apparatus and method may be implemented in other manners. For example, the described apparatus embodiment is merely an example. For example, division into the modules is merely logical function division. There may be another division manner during actual implementation. For example, a plurality of modules or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses may be implemented in electronic, mechanical, or other forms.

The units described as separate parts may or may not be physically separate, and parts displayed as units may be one or more physical units, may be located in one place, or may be distributed in different places. Some or all of the units may be selected based on actual requirements to achieve the objectives of the solutions of embodiments.

## Claims

1. A target tracking apparatus (100), comprising an image sensor (110), a controller (120), an image signal processor (130), and an event processor (140), wherein a processing capability of the image signal processor (130) is higher than a processing capability of the event processor (140), the image signal processor (130) and the event processor (140) being each a dedicated processor, wherein the event processor (140) has a function that is simpler than a function of the image signal processor (130), the event processor (140) consumes less computing resources than the image signal processor (130), and the event processor (140) performs processing on an image less complex than the image signal processor (130);
the image sensor (110) is configured to: capture a first raw image, and send the first raw image to the controller (120); and
the controller (120) is configured to: determine a motion distance, in two adjacent frames of raw images, of a target object in the first raw image, wherein the first raw image is a next frame of image of the two adjacent frames of raw images; determine a target processor from the image signal processor (130) and the event processor (140) based on the motion distance, wherein a processing capability of the target processor matches the motion distance; and perform target tracking on the target object based on the first raw image by using the target processor;
wherein
if the target processor is the image signal processor (130), the image signal processor (130) is configured to: convert the first raw image to an RGB image, and send the RGB image to the controller (120); and
if the target processor is the event processor (140), the event processor (140) is configured to: convert the first raw image to an event data stream, and send the event data stream to the controller (120), wherein the event data stream indicates a brightness change status of a pixel in the first raw image; and
the controller (120) is specifically configured to perform target tracking on the target object based on the RGB image or the event data stream.

2. The apparatus (100) according to claim 1, wherein the controller (120) is specifically configured to determine the target processor from the image signal processor (130) and the event processor (140) based on the motion distance and a preset distance threshold.

3. The apparatus (100) according to claim 2, the controller (120) is specifically configured to:
if the motion distance is greater than the distance threshold, determine the image signal processor (130) as the target processor; or
if the motion distance is less than or equal to the distance threshold, determine the event processor (140) as the target processor.

4. The apparatus (100) according to any one of claims 1 to 3, wherein the controller (120) is specifically configured to determine first location information based on the first raw image by using the target processor, wherein the first location information indicates a location of the target object at a capturing moment of the first raw image.

5. The apparatus (100) according to any one of claims 1 to 4, wherein the controller (120) is specifically configured to:
determine second location information based on a second raw image, wherein the second raw image is a former frame of raw image in the two adjacent frames of raw images, and the second location information indicates a location of the target object at a capturing moment of the second raw image;
determine third location information based on a third raw image, wherein the third raw image is a latter frame of raw image in the two adjacent frames of raw images, and the third location information indicates a location of the target object at a capturing moment of the third raw image; and
determine the motion distance based on the second location information and the third location information.

6. The apparatus (100) according to any one of claims 1 to 5, wherein the target object comprises an eyeball.

7. A target tracking method, comprising:
capturing (S201) a first raw image;
determining (S203) a motion distance, in two adjacent frames of raw images, of a target object in the first raw image, wherein the first raw image is a next frame of image of the two adjacent frames of raw images;
determining (S204) a target processor from the image signal processor (130) and the event processor (140) based on the motion distance, wherein a processing capability of the image signal processor (130) is higher than a processing capability of the event processor (140), and a processing capability of the target processor matches the motion distance, the image signal processor (130) and the event processor (140) being each a dedicated processor, wherein the event processor (140) has a function that is simpler than a function of the image signal processor (130), the event processor (140) consumes less computing resources than the image signal processor (130), and the event processor (140) performs processing on an image less complex than the image signal processor (130); and
performing (S205) target tracking on the target object based on the first raw image by using the target processor;
wherein the performing (S205) target tracking on the target object based on the first raw image by using the target processor comprises:
if the target processor is the image signal processor (130), converting (S206) the first raw image to an RGB image by using the image signal processor (130); and
if the target processor is the event processor (140), converting (S211) the first raw image to an event data stream by using the event processor (140), wherein the event data stream indicates a brightness change status of a pixel in the first raw image; and
performing (S209, S213) target tracking on the target object based on the RGB image or the event data stream.

8. The method according to claim 7, wherein the determining (S204) a target processor from the image signal processor (130) and the event processor (140) based on the motion distance comprises:
determining the target processor from the image signal processor (130) and the event processor (140) based on the motion distance and a preset distance threshold.

9. The method according to claim 8, wherein the determining (S204) the target processor from the image signal processor (130) and the event processor (140) based on the motion distance and a preset distance threshold comprises:
if the motion distance is greater than the distance threshold, determining the image signal processor (130) as the target processor; or
if the motion distance is less than or equal to the distance threshold, determining the event processor (140) as the target processor.

10. The method according to any one of claims 7 to 9, wherein the performing (S205) target tracking on the target object based on the first raw image by using the target processor comprises:
determining first location information based on the first raw image by using the target processor, wherein the first location information indicates a location of the target object at a capturing moment of the first raw image.

11. The method according to any one of claims 7 to 10, wherein the determining (S203) a motion distance, in two adjacent frames of raw images, of a target object in the first raw image comprises:
determining second location information based on a second raw image, wherein the second raw image is a former frame of raw image in the two adjacent frames of raw images, and the second location information indicates a location of the target object at a capturing moment of the second raw image;
determining third location information based on a third raw image, wherein the third raw image is a latter frame of raw image in the two adjacent frames of raw images, and the third location information indicates a location of the target object at a capturing moment of the third raw image; and
determining the motion distance based on the second location information and the third location information.

12. The method according to any one of claims 7 to 11, wherein the target object comprises an eyeball.

13. A computer-readable storage medium, wherein the computer-readable storage medium stores a computer program, and when being executed by the target tracking apparatus according to any one of claims 1-6, the computer program is used to implement the method according to any one of claims 7 to 12.

14. A computer program product, wherein when being executed by the target tracking apparatus according to any one of claims 1-6, the computer program product is used to implement the method according to any one of claims 7 to 12.

## Patentansprüche

1. Zielverfolgungsvorrichtung (100), umfassend einen Bildsensor (110), eine Steuereinheit (120), einen Bildsignalprozessor (130) und einen Ereignisprozessor (140), wobei eine Verarbeitungsfähigkeit des Bildsignalprozessors (130) höher als eine Verarbeitungsfähigkeit des Ereignisprozessors (140) ist, der Bildsignalprozessor (130) und der Ereignisprozessor (140) jeweils ein dedizierter Prozessor sind, wobei der Ereignisprozessor (140) eine Funktion aufweist, die einfacher als eine Funktion des Bildsignalprozessors (130) ist, der Ereignisprozessor (140) weniger Rechenressourcen als der Bildsignalprozessor (130) verbraucht und der Ereignisprozessor (140) eine weniger komplexe Verarbeitung an einem Bild als der Bildsignalprozessor (130) durchführt;
der Bildsensor (110) konfiguriert ist, um: ein erstes Rohbild zu erfassen und das erste Rohbild an die Steuereinheit (120) zu senden; und
die Steuereinheit (120) konfiguriert ist, um: in zwei angrenzenden Einzelbildern von Rohbildern eine Bewegungsdistanz eines Zielobjekts in dem ersten Rohbild zu bestimmen, wobei das erste Rohbild ein nächstes Einzelbild eines Bildes von den zwei angrenzenden Einzelbildern von Rohbildern ist; einen Zielprozessor aus dem Bildsignalprozessor (130) und dem Ereignisprozessor (140) basierend auf der Bewegungsdistanz zu bestimmen, wobei eine Verarbeitungsfähigkeit des Zielprozessors der Bewegungsdistanz entspricht; und eine Zielverfolgung an dem Zielobjekt basierend auf dem ersten Rohbild durch Verwenden des Zielprozessors durchzuführen;
wobei
falls der Zielprozessor der Bildsignalprozessor (130) ist, der Bildsignalprozessor (130) konfiguriert ist, um: das erste Rohbild in ein RGB-Bild umzuwandeln und das RGB-Bild an die Steuereinheit (120) zu senden; und
falls der Zielprozessor der Ereignisprozessor (140) ist, der Ereignisprozessor (140) konfiguriert ist, um: das erste Rohbild in einen Ereignisdatenstrom umzuwandeln und den Ereignisdatenstrom an die Steuereinheit (120) zu senden, wobei der Ereignisdatenstrom einen Helligkeitsänderungsstatus eines Pixels in dem ersten Rohbild angibt; und
die Steuereinheit (120) speziell konfiguriert ist, um die Zielverfolgung an dem Zielobjekt basierend auf dem RGB-Bild oder dem Ereignisdatenstrom durchzuführen.

2. Vorrichtung (100) nach Anspruch 1, wobei die Steuereinheit (120) speziell konfiguriert ist, um den Zielprozessor aus dem Bildsignalprozessor (130) und dem Ereignisprozessor (140) basierend auf der Bewegungsdistanz und einem voreingestellten Distanzschwellenwert zu bestimmen.

3. Vorrichtung (100) nach Anspruch 2, wobei die Steuereinheit (120) speziell konfiguriert ist, um:
falls die Bewegungsdistanz größer als der Distanzschwellenwert ist, den Bildsignalprozessor (130) als den Zielprozessor zu bestimmen; oder
falls die Bewegungsdistanz weniger als der Distanzschwellenwert beträgt oder gleich diesem ist, den Ereignisprozessor (140) als den Zielprozessor zu bestimmen.

4. Vorrichtung (100) nach einem der Ansprüche 1 bis 3, wobei die Steuereinheit (120) speziell konfiguriert ist, um durch Verwenden des Zielprozessors erste Positionsinformationen basierend auf dem ersten Rohbild zu bestimmen, wobei die ersten Positionsinformationen eine Position des Zielobjekts zu einem Zeitpunkt der Erfassung des ersten Rohbildes angeben.

5. Vorrichtung (100) nach einem der Ansprüche 1 bis 4, wobei die Steuereinheit (120) speziell konfiguriert ist, um:
zweite Positionsinformationen basierend auf einem zweiten Rohbild zu bestimmen, wobei das zweite Rohbild ein früheres Einzelbild eines Rohbildes in den zwei angrenzenden Einzelbildern von Rohbildern ist und die zweiten Positionsinformationen eine Position des Zielobjekts zu einem Zeitpunkt der Erfassung des zweiten Rohbildes angeben;
dritte Positionsinformationen basierend auf einem dritten Rohbild zu bestimmen, wobei das dritte Rohbild ein späteres Einzelbild eines Rohbildes in den zwei angrenzenden Einzelbildern von Rohbildern ist und die dritten Positionsinformationen eine Position des Zielobjekts zu einem Zeitpunkt der Erfassung des dritten Rohbildes angeben; und
die Bewegungsdistanz basierend auf den zweiten Positionsinformationen und den dritten Positionsinformationen zu bestimmen.

6. Vorrichtung (100) nach einem der Ansprüche 1 bis 5, wobei das Zielobjekt einen Augapfel umfasst.

7. Zielverfolgungsverfahren, umfassend:
Erfassen (S201) eines ersten Rohbildes;
Bestimmen (S203) einer Bewegungsdistanz, in zwei angrenzenden Einzelbildern von Rohbildern, eines Zielobjekts in dem ersten Rohbild, wobei das erste Rohbild ein nächstes Einzelbild eines Bildes der zwei angrenzenden Einzelbilder von Rohbildern ist;
Bestimmen (S204) eines Zielprozessors aus dem Bildsignalprozessor (130) und dem Ereignisprozessor (140) basierend auf der Bewegungsdistanz, wobei eine Verarbeitungsfähigkeit des Bildsignalprozessors (130) höher als eine Verarbeitungsfähigkeit des Ereignisprozessors (140) ist und eine Verarbeitungsfähigkeit des Zielprozessors der Bewegungsdistanz entspricht, der Bildsignalprozessor (130) und der Ereignisprozessor (140) jeweils ein dedizierter Prozessor sind, wobei der Ereignisprozessor (140) eine Funktion aufweist, die einfacher als eine Funktion des Bildsignalprozessors (130) ist, der Ereignisprozessor (140) weniger Rechenressourcen als der Bildsignalprozessor (130) verbraucht und der Ereignisprozessor (140) eine weniger komplexe Verarbeitung an einem Bild als der Bildsignalprozessor (130) durchführt; und
Durchführen (S205) der Zielverfolgung an dem Zielobjekt basierend auf dem ersten Rohbild durch Verwenden des Zielprozessors;
wobei das Durchführen (S205) der Zielverfolgung an dem Zielobjekt basierend auf dem ersten Rohbild durch Verwenden des Zielprozessors umfasst:
falls der Zielprozessor der Bildsignalprozessor (130) ist, Umwandeln (S206) des ersten Rohbildes in ein RGB-Bild durch Verwenden des Bildsignalprozessors (130); und
falls der Zielprozessor der Ereignisprozessor (140) ist, Umwandeln (S211) des ersten Rohbildes in einen Ereignisdatenstrom durch Verwenden des Ereignisprozessors (140), wobei der Ereignisdatenstrom einen Helligkeitsänderungsstatus eines Pixels in dem ersten Rohbild angibt; und
Durchführen (S209, S213) der Zielverfolgung an dem Zielobjekt basierend auf dem RGB-Bild oder dem Ereignisdatenstrom.

8. Verfahren nach Anspruch 7, wobei das Bestimmen (S204) eines Zielprozessors aus dem Bildsignalprozessor (130) und dem Ereignisprozessor (140) basierend auf der Bewegungsdistanz umfasst:
Bestimmen des Zielprozessors aus dem Bildsignalprozessor (130) und dem Ereignisprozessor (140) basierend auf der Bewegungsdistanz und einem voreingestellten Distanzschwellenwert.

9. Verfahren nach Anspruch 8, wobei das Bestimmen (S204) des Zielprozessors aus dem Bildsignalprozessor (130) und dem Ereignisprozessor (140) basierend auf der Bewegungsdistanz und einem voreingestellten Distanzschwellenwert umfasst:
falls die Bewegungsdistanz größer als der Distanzschwellenwert ist, Bestimmen des Bildsignalprozessors (130) als den Zielprozessor; oder
falls die Bewegungsdistanz weniger als der Distanzschwellenwert beträgt oder gleich diesem ist, Bestimmen des Ereignisprozessors (140) als den Zielprozessor.

10. Verfahren nach einem der Ansprüche 7 bis 9, wobei das Durchführen (S205) der Zielverfolgung an dem Zielobjekt basierend auf dem ersten Rohbild durch Verwenden des Zielprozessors umfasst:
Bestimmen der ersten Positionsinformationen basierend auf dem ersten Rohbild durch Verwenden des Zielprozessors, wobei die ersten Positionsinformationen eine Position des Zielobjekts zu einem Zeitpunkt der Erfassung des ersten Rohbildes angeben.

11. Verfahren nach einem der Ansprüche 7 bis 10, wobei das Bestimmen (S203) einer Bewegungsdistanz, in zwei angrenzenden Einzelbildern von Rohbildern, eines Zielobjekts in dem ersten Rohbild umfasst:
Bestimmen der zweiten Positionsinformationen basierend auf einem zweiten Rohbild, wobei das zweite Rohbild ein früheres Einzelbild eines Rohbildes in den zwei angrenzenden Einzelbildern von Rohbildern ist und die zweiten Positionsinformationen eine Position des Zielobjekts zu einem Zeitpunkt der Erfassung des zweiten Rohbildes angeben;
Bestimmen der dritten Positionsinformationen basierend auf einem dritten Rohbild, wobei das dritte Rohbild ein späteres Einzelbild eines Rohbildes in den zwei angrenzenden Einzelbildern von Rohbildern ist und die dritten Positionsinformationen eine Position des Zielobjekts zu einem Zeitpunkt der Erfassung des dritten Rohbildes angeben; und
Bestimmen der Bewegungsdistanz basierend auf den zweiten Positionsinformationen und den dritten Positionsinformationen.

12. Verfahren nach einem der Ansprüche 7 bis 11, wobei das Zielobjekt einen Augapfel umfasst.

13. Computerlesbares Speichermedium, wobei das computerlesbare Speichermedium ein Computerprogramm speichert und, wenn es durch die Zielverfolgungsvorrichtung nach einem der Ansprüche 1 bis 6 ausgeführt wird, das Computerprogramm dazu verwendet wird, das Verfahren nach einem der Ansprüche 7 bis 12 zu implementieren.

14. Computerprogrammprodukt, wobei, wenn es durch die Zielverfolgungsvorrichtung nach einem der Ansprüche 1 bis 6 ausgeführt wird, das Computerprogrammprodukt dazu verwendet wird, das Verfahren nach einem der Ansprüche 7 bis 12 zu implementieren.

## Revendications

1. Appareil de suivi de cible (100), comprenant un capteur d'image (110), un dispositif de commande (120), un processeur de signal d'image (130) et un processeur d'événements (140), dans lequel la capacité de traitement du processeur de signal d'image (130) est supérieure à la capacité de traitement du processeur d'événements (140), le processeur de signal d'image (130) et le processeur d'événements (140) étant chacun un processeur dédié, dans lequel le processeur d'événements (140) a une fonction plus simple qu'une fonction du processeur de signal d'image (130), le processeur d'événements (140) consomme moins de ressources de calcul que le processeur de signal d'image (130) et le processeur d'événements (140) réalise un traitement sur une image moins complexe que le processeur de signal d'image (130) ;
le capteur d'image (110) est configuré pour : capturer une première image brute et envoyer la première image brute au dispositif de commande (120) ; et
le dispositif de commande (120) est configuré pour : déterminer une distance de mouvement, dans deux trames adjacentes d'images brutes, d'un objet cible dans la première image brute, dans lequel la première image brute est une trame suivante d'image des deux trames adjacentes d'images brutes ; déterminer un processeur cible à partir du processeur de signal d'image (130) et du processeur d'événements (140) sur la base de la distance de mouvement, dans lequel une capacité de traitement du processeur cible correspond à la distance de mouvement ; et réaliser le suivi de la cible sur l'objet cible sur la base de la première image brute à l'aide du processeur cible ;
dans lequel
si le processeur cible est le processeur de signal d'image (130), le processeur de signal d'image (130) est configuré pour : convertir la première image brute en une image RGB et envoyer l'image RGB au dispositif de commande (120) ; et
si le processeur cible est le processeur d'événements (140), le processeur d'événements (140) est configuré pour : convertir la première image brute en un flux de données d'événement, et envoyer le flux de données d'événement au dispositif de commande (120), dans lequel le flux de données d'événement indique un état de changement de luminosité d'un pixel dans la première image brute ; et
le dispositif de commande (120) est spécifiquement configuré pour réaliser un suivi de cible sur l'objet cible sur la base de l'image RGB ou du flux de données d'événement.

2. Appareil (100) selon la revendication 1, dans lequel le dispositif de commande (120) est spécifiquement configuré pour déterminer le processeur cible à partir du processeur de signal d'image (130) et du processeur d'événements (140) sur la base de la distance de mouvement et d'un seuil de distance prédéfini.

3. Appareil (100) selon la revendication 2, le dispositif de commande (120) est spécifiquement configuré pour :
si la distance de mouvement est supérieure au seuil de distance, déterminer le processeur de signal d'image (130) comme processeur cible ; ou
si la distance de mouvement est inférieure ou égale au seuil de distance, déterminer le processeur d'événements (140) comme processeur cible.

4. Appareil (100) selon l'une quelconque des revendications 1 à 3, dans lequel le dispositif de commande (120) est spécifiquement configuré pour déterminer les premières informations d'emplacement sur la base de la première image brute à l'aide du processeur cible, dans lequel les premières informations d'emplacement indiquent un emplacement de l'objet cible au moment de la capture de la première image brute.

5. Appareil (100) selon l'une quelconque des revendications 1 à 4, dans lequel le dispositif de commande (120) est spécifiquement configuré pour :
déterminer les deuxièmes informations d'emplacement sur la base d'une deuxième image brute, dans lequel la deuxième image brute est une trame antérieure d'image brute dans les deux trames adjacentes d'images brutes, et les deuxièmes informations d'emplacement indiquent un emplacement de l'objet cible au moment de la capture de la deuxième image brute ;
déterminer les troisièmes informations d'emplacement sur la base d'une troisième image brute, dans lequel la troisième image brute est une trame antérieure d'image brute dans les deux trames adjacentes d'images brutes, et les troisièmes informations d'emplacement indiquent un emplacement de l'objet cible au moment de la capture de la troisième image brute ; et
déterminer la distance de mouvement sur la base des deuxièmes informations d'emplacement et des troisièmes informations d'emplacement.

6. Appareil (100) selon l'une quelconque des revendications 1 à 5, dans lequel l'objet cible comprend un globe oculaire.

7. Procédé de suivi de cible, comprenant :
la capture (S201) d'une première image brute ;
la détermination (S203) d'une distance de mouvement, dans deux trames adjacentes d'images brutes, d'un objet cible dans la première image brute, dans lequel la première image brute est une trame suivante d'image des deux trames adjacentes d'images brutes ;
la détermination (S204) d'un processeur cible à partir du processeur de signal d'image (130) et du processeur d'événements (140) sur la base de la distance de mouvement, dans lequel une capacité de traitement du processeur de signal d'image (130) est supérieure à une capacité de traitement du processeur d'événements (140), et une capacité de traitement du processeur cible correspond à la distance de mouvement, le processeur de signal d'image (130) et le processeur d'événements (140) étant chacun un processeur dédié, dans lequel le processeur d'événements (140) a une fonction plus simple qu'une fonction du processeur de signal d'image (130), le processeur d'événements (140) consomme moins de ressources de calcul que le processeur de signal d'image (130) et le processeur d'événements (140) réalise le traitement sur une image moins complexe que le processeur de signal d'image (130) ; et
la réalisation (S205) du suivi de cible sur l'objet cible basé sur la première image brute à l'aide du processeur cible ;
dans lequel la réalisation (S205) du suivi de cible sur l'objet cible sur la base de la première image brute à l'aide du processeur cible comprend :
si le processeur cible est le processeur de signal d'image (130), la conversion (S206) de la première image brute en une image RGB à l'aide du processeur de signal d'image (130) ; et
si le processeur cible est le processeur d'événements (140), la conversion (S211) de la première image brute en un flux de données d'événement à l'aide du processeur d'événements (140), dans lequel le flux de données d'événement indique un état de changement de luminosité d'un pixel dans la première image brute ; et
la réalisation (S209, S213) d'un suivi de cible sur l'objet cible sur la base de l'image RGB ou du flux de données d'événements.

8. Procédé selon la revendication 7, dans lequel la détermination (S204) d'un processeur cible à partir du processeur de signal d'image (130) et du processeur d'événements (140) sur la base de la distance de mouvement comprend :
la détermination du processeur cible à partir du processeur de signal d'image (130) et du processeur d'événements (140) sur la base de la distance de mouvement et d'un seuil de distance prédéfini.

9. Procédé selon la revendication 8, dans lequel la détermination (S204) du processeur cible à partir du processeur de signal d'image (130) et du processeur d'événements (140) sur la base de la distance de mouvement et d'un seuil de distance prédéfini comprend :
si la distance de mouvement est supérieure au seuil de distance, la détermination du processeur de signal d'image (130) comme processeur cible ; ou
si la distance de mouvement est inférieure ou égale au seuil de distance, la détermination du processeur d'événements (140) comme processeur cible.

10. Procédé selon l'une quelconque des revendications 7 à 9, dans lequel la réalisation (S205) du suivi de cible sur l'objet cible sur la base de la première image brute à l'aide du processeur cible comprend :
la détermination des premières informations d'emplacement sur la base de la première image brute à l'aide du processeur cible, dans lequel les premières informations d'emplacement indiquent un emplacement de l'objet cible au moment de la capture de la première image brute.

11. Procédé selon l'une quelconque des revendications 7 à 10, dans lequel la détermination (S203) d'une distance de mouvement, dans deux trames adjacentes d'images brutes, d'un objet cible dans la première image brute comprend :
la détermination des deuxièmes informations d'emplacement sur la base d'une deuxième image brute, dans lequel la deuxième image brute est une trame antérieure d'image brute dans les deux trames adjacentes d'images brutes, et les deuxièmes informations d'emplacement indiquent un emplacement de l'objet cible à un moment de capture de la deuxième image brute ;
la détermination des troisièmes informations d'emplacement sur la base d'une troisième image brute, dans lequel la troisième image brute est une trame antérieure d'image brute dans les deux trames adjacentes d'images brutes, et les troisièmes informations d'emplacement indiquent un emplacement de l'objet cible au moment de la capture de la troisième image brute ; et
la détermination de la distance de mouvement sur la base des deuxièmes informations d'emplacement et des troisièmes informations d'emplacement.

12. Procédé selon l'une quelconque des revendications 7 à 11, dans lequel l'objet cible comprend un globe oculaire.

13. Support de stockage lisible par ordinateur, dans lequel le support de stockage lisible par ordinateur stocke un programme informatique, et lorsqu'il est exécuté par l'appareil de suivi de cible selon l'une quelconque des revendications 1 à 6,
le programme informatique est utilisé pour mettre en œuvre le procédé selon l'une quelconque des revendications 7 à 12.

14. Produit de programme informatique, dans lequel lorsqu'il est exécuté par l'appareil de suivi de cible selon l'une quelconque des revendications 1 à 6, le produit de programme informatique est utilisé pour mettre en œuvre le procédé selon l'une quelconque des revendications 7 à 12.
